# FASCICULE DE BREVET EUROPEEN

(11) **EP 1 648 960 B1**
(45) Date de publication et mention de la délivrance du brevet: **18.01.2012**
(21) Numéro de dépôt: 04763345.8
(22) Date de dépôt: 20.07.2004
(51) Int. Cl.: C08L 9/00, B60C 1/00, C08K 3/04, C08K 3/22, C08K 3/36

(54) **BANDE DE ROULEMENT POUR PNEUMATIQUE**
REIFENLAUFFLÄCHE
TYRE TREAD

(30) Priorité: 21.07.2003 FR 0308891
(43) Date de publication de la demande: 26.04.2006
(73) Titulaire: Société de Technologie Michelin, 63000 Clermont-Ferrand Cedex 09 (FR); Michelin Recherche et Technique S.A., 1763 Granges-Paccot (CH)
(72) Inventeur: CAMBON, Stéphanie, F-63400 Chamalières (FR); VASSEUR, Didier, F-63100 Clermont-Ferrand (FR)
(74) Mandataire: Ribière, Joel
(86) Numéro de dépôt international: PCT/EP2004/008079
(87) Numéro de publication internationale: WO 2005/019331

(56) Documents cités:
- EP-A- 0 501 227
- EP-A- 0 863 182
- EP-A- 1 122 281
- WO-A-02/10269

## Description

La présente invention est relative aux bandes de roulement de pneumatiques comportant des compositions de caoutchouc renforcées par une charge inorganique telle que de la silice.

Elle se rapporte plus particulièrement aux bandes de roulement renforcées majoritairement d'une charge inorganique et comportant du noir de carbone à titre minoritaire.

Une bande de roulement de pneumatique doit obéir, on le sait, à un grand nombre d'exigences techniques, souvent antinomiques, parmi lesquelles une faible résistance au roulement, une résistance élevée à l'usure, ainsi qu'une adhérence élevée en particulier sur route mouillée ou humide.

Ces compromis de propriétés, en particulier du point de vue de la résistance au roulement, ont pu être améliorés ces dernières années sur les « Pneus Verts » à faible consommation d'énergie, destinés notamment aux véhicules tourisme, grâce à l'emploi de nouvelles compositions de caoutchouc faiblement hystérétiques ayant pour caractéristique d'être renforcées majoritairement de charges inorganiques spécifiques dites renforçantes, capables de rivaliser, du point de vue du pouvoir renforçant, avec les noirs de carbone conventionnels de grade pneumatique.

Ainsi, aujourd'hui, ces charges inorganiques renforçantes remplacent peu à peu les noirs de carbone conventionnels dans les bandes de roulement des pneumatiques.

Toutefois, on continue d'utiliser dans tous les cas une faible quantité de noir de carbone, généralement comprise dans un domaine de 5 à 10 ou 20 pce (Parties en poids pour Cent parties d'Elastomère) : dans les intervalles indiqués, on sait qu'on peut bénéficier des propriétés colorantes (agent de pigmentation noire) et anti-UV des noirs de carbone, sans pénaliser par ailleurs les performances typiques apportées par la charge inorganique renforçante, à savoir faible hystérèse et adhérence améliorée sur sol mouillé, enneigé ou verglacé. Pour illustrer cet état de la technique, on citera par exemple les brevets ou demandes de brevet FR 2797636 (ou GB 2354246), EP 890606 (ou US 6008295), EP 1092565 (ou US 6581659), US2002/0151640, WO 01/96442 (ou US2003/0191225), WO 02/10269, WO 02/22728, WO 02/30939, WO 02/31041, WO 02/053634, WO 02/066519, WO 02/083782, WO 02/088238, WO 03/002648, WO 03/002649, WO 2003/16387, WO 2004/088238.

Or, les Demanderesses ont découvert que les compromis de propriétés précédemment évoqués pouvaient être encore nettement améliorés, du point de vue de l'adhérence sur sol mouillé ou humide, en réduisant à un très faible taux la quantité de noir de carbone présent dans les compositions de caoutchouc des bandes de roulement.

En conséquence, un premier objet de l'invention concerne une bande de roulement de pneumatique comportant une composition de caoutchouc à base d'au moins un élastomère diénique, une charge inorganique renforçante, un agent de couplage charge inorganique/ élastomère et un noir de carbone, caractérisée en ce que le taux de noir de carbone est compris entre 0,05 et 1,5 pce (parties en poids pour cent parties d'élastomère).

Il a été en effet constaté, de manière surprenante, que la réduction de la quantité de noir de carbone dans ce domaine étroit de concentration, dans lequel la fonction nécessaire d'agent de coloration noire reste encore active mais plus celle d'agent anti-UV, conduisait après une exposition au rayonnement UV-visible (photo-oxydation) de la surface de la bande de roulement, à une augmentation sensible de l'adhérence sur route mouillée se traduisant notamment par une réduction notable des distances de freinage.

L'invention a également pour objet l'utilisation d'une telle bande de roulement pour la fabrication de pneumatiques neufs ou le rechapage des pneumatiques usagés.

La bande de roulement conforme à l'invention est particulièrement adaptée aux pneumatiques destinés à équiper des véhicules de tourisme, camionnettes, SUV (*"Sport Utility Vehicles"*), véhicules 4x4 (à 4 roues motrices), deux roues (notamment motos), "Poids-lourds" (c'est-à-dire métro, bus, engins de transport routier (camions, tracteurs, remorques), véhicules hors-la-route), avions, engins de génie civil, agraire, ou de manutention.

L'invention a également pour objet ces pneumatiques eux-mêmes lorsqu'ils comportent une bande de roulement conforme à l'invention.

L'invention concerne les bandes de roulement et les pneumatiques tant à l'état cru (i.e., avant cuisson) qu'à l'état cuit (i.e., après réticulation ou vulcanisation), avant comme après traitement de photo-oxydation.

L'invention a aussi pour objet un procédé pour préparer une bande de roulement de pneumatique apte à présenter, après photo-oxydation de sa surface, une adhérence améliorée sur sol mouillé, ce procédé étant caractérisé en ce qu'il comporte les étapes suivantes :
- incorporer à un élastomère diénique, dans un mélangeur :
   - une charge inorganique renforçante ;
   - un agent de couplage charge inorganique/ élastomère diénique ;
   - entre 0,05 et 1,5 pce de noir de carbone,
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
   - un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

L'invention ainsi que ses avantages seront aisément compris à la lumière de la description et des exemples de réalisation qui suivent.

### I. MESURES ET TESTS UTILISES

Les bandes de roulement et compositions de caoutchouc constitutives de ces bandes de roulement sont caractérisées, avant et après cuisson, comme indiqué ci-après.

### I-1. Plasticité Mooney

On utilise un consistomètre oscillant tel que décrit dans la norme française NF T 43-005 (Novembre 1980). La mesure de plasticité Mooney se fait selon le principe suivant : la composition à l'état cru (Le., avant cuisson ou vulcanisation) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (Le., après un cycle d'accommodation au taux d'extension prévu pour la mesure elle-même) les modules sécants nominaux (ou contraintes apparentes, en MPa) à 10% d'allongement (notés M10), 100% d'allongement (notés M100) et 300% d'allongement (notés M300).

Les contraintes à la rupture (en MPa) et les allongements à la rupture (en %) sont également mesurés. Toutes ces mesures de traction sont effectuées dans les conditions normales de température (23±2°C) et d'hygrométrie (50±5% d'humidité relative), selon la norme française NF T 40-101 (décembre 1979).

### I-3. Tests sur pneumatiques (Freinage sur route mouillée)

Les pneumatiques sont montés sur un véhicule automobile équipé d'un système de freinage ABS et on mesure la distance nécessaire pour passer de 50 km/h à 10 km/h lors d'un freinage brutal sur un sol arrosé (béton bitumineux). Une valeur supérieure à celle du témoin, arbitrairement fixée à 100, indique un résultat amélioré c'est-à-dire une distance de freinage plus courte.

### II. DESCRIPTION DETAILLEE DE L'INVENTION

Les bandes de roulement selon invention sont formées, au moins pour leur partie superficielle destinée à entrer en contact avec la route, d'une composition de caoutchouc à base d'au moins : (i) un (au moins un) élastomère diénique ; (ii) une (au moins une) charge inorganique à titre de charge renforçante; (iii) un (au moins un) agent de couplage assurant la liaison entre la charge inorganique renforçante et l'élastomère diénique ; (iv) un (au moins un) noir de carbone en très faible quantité, comprise entre 0,05 et 1,5 pce.

Bien entendu, par l'expression composition "à base de", il faut entendre une composition comportant le mélange et/ou le produit de réaction des différents constituants utilisés, certains de ces constituants de base (par exemple l'agent de couplage) étant susceptibles de, ou destinés à réagir entre eux, au moins en partie, lors des différentes phases de fabrication des bandes de roulement, en particulier au cours de leur vulcanisation (cuisson).

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, l'homme du métier du pneumatique comprendra que la présente invention est de préférence mise en oeuvre avec des élastomères diéniques fortement insaturés, en particulier avec :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di-alkyl(C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, paraméthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La bande de roulement conforme à l'invention est préférentiellement destinée à un pneumatique pour véhicule tourisme. Dans un tel cas, l'élastomère diénique est de préférence un copolymère SBR, en particulier un SBR préparé en solution, utilisé de préférence en mélange avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, et le polybutadiène possède plus de 90% de liaisons cis-1,4.

Dans le cas d'un pneumatique pour véhicule Poids-lourd, l'élastomère diénique est de préférence un élastomère isoprénique, c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène ou un mélange de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule Poids-lourd, l'élastomère diénique peut être aussi constitué, en tout ou partie, d'un autre élastomère fortement insaturé tel que, par exemple, un élastomère SBR

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des oxydes de titane ou des carbures de silicium renforçants (voir par exemple demandes WO 99/28376, WO 00/73372, WO 02/053634).

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649 précitées).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. Toutefois, de manière préférentielle, ce taux de charge inorganique renforçante sera choisi supérieur à 50 pce, en particulier compris entre 60 et 140 pce, plus préférentiellement encore compris dans un domaine allant de 70 à 130 pce en particulier lorsque la bande de roulement est destinée à un pneumatique tourisme.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 [méthode volumétrique multipoints (5 points) - gaz: azote - dégazage: 1heure à 160°C - domaine de pression relative *p*/*po :* 0.05 à 0.17]. La surface spécifique CTAB est la surface externe déterminée selon la norme française NF T 45-007 de novembre 1987 (méthode B).

### II-3. Agent de couplage

De manière connue, en présence d'une charge inorganique renforçante, il est nécessaire d'utiliser un agent de couplage ou agent de liaison dont la fonction est d'assurer une connexion suffisante, de nature chimique et/ou physique, entre la charge inorganique (surface de ses particules) et l'élastomère diénique.

Un tel agent de couplage, par conséquent au moins bifonctionnel, a par exemple comme formule générale simplifiée "Y-T-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- T représente un groupe divalent permettant de relier Y et X.

Les agents de couplage ne doivent en particulier pas être confondus avec de simples agents de recouvrement de charge inorganique qui de manière connue peuvent comporter la fonction Y active vis-à-vis de la charge inorganique mais sont dépourvus de la fonction X active vis-à-vis de l'élastomère.

Des agents de couplage silice/ élastomère diénique, d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y.

On utilise notamment des silanes polysulfurés, dits "symétriques" ou "asymétriques" selon leur structure particulière, tels que décrits par exemple dans les demandes WO03/002648 et WO03/002649 précitées.

Conviennent en particulier pour la mise en oeuvre de l'invention, sans que la définition ci-après soit limitative, des silanes polysulfurés dits "symétriques" répondant à la formule générale (I) suivante:

Z - A - Sₙ - A - Z , (I)

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 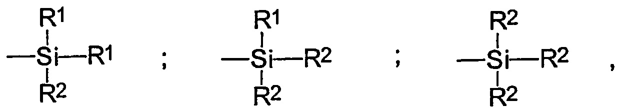 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme exemples d'agents de couplage avantageux les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande WO02/083782 précitée.

A titre d'exemples d'agents de couplage autres que les alkoxysilanes polysulfurés précités, on citera notamment des polyorganosiloxanes bifonctionnels ou encore des polysulfures

Dans les bandes de roulement conformes à l'invention, la teneur en agent de couplage est préférentiellement comprise entre 2 et 15 pce, plus préférentiellement entre 4 et 12 pce (par exemple entre 4 et 8 pce). Mais il est en général souhaitable d'en utiliser le moins possible. Par rapport au poids de charge inorganique renforçante, le taux d'agent de couplage représente typiquement entre 0,5 et 15% en poids par rapport à la quantité de charge inorganique renforçante. Dans le cas par exemple de bandes de roulement de pneumatiques pour véhicules tourisme, l'agent de couplage est utilisé à un taux préférentiel inférieur à 12%, voire même inférieur à 10% en poids par rapport à cette quantité de charge inorganique renforçante.

L'agent de couplage pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'agent de couplage pourrait également être préalablement greffé (via la fonction "Y") sur la charge inorganique renforçante, la charge ainsi "précouplée" pouvant ensuite être liée à l'élastomère diénique par l'intermédiaire de la fonction libre "X". On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

### II-4. Noir de carbone

Le noir de carbone est utilisé à un taux compris entre 0,05 et 1,5 pce, fourchette étroite dans laquelle le noir conserve sa fonction, nécessaire, d'agent de coloration noire mais ne remplit plus celle d'agent anti-UV. Pour cette raison, le taux de noir est plus préférentiellement compris entre 0,1 et 1,0 pce, encore plus préférentiellement compris entre 0,1 et 0,5 pce.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les pneumatiques. Parmi ces derniers, on peut citer les noirs de carbone renforçants des séries (grades ASTM) 100, 200 ou 300 utilisés dans les bandes de roulement de ces pneumatiques (par exemple N115, N134, N234, N326, N330, N339, N347, N375), mais encore ceux du type non-renforçants (car moins structurés) des séries plus élevées 400 à 700 (par exemple les noirs N660, N683, N772). On pourrait aussi utiliser à titre d'exemple des noirs non-renforçants dits "noirs d'encre" utilisés comme pigments noirs dans les encres d'imprimerie, les peintures.

Les noirs de carbone peuvent être utilisés à l'état isolé, tels que disponibles commercialement, ou sous tout autre forme, par exemple comme support de certains des additifs de caoutchouterie utilisés. renforçants dits "noirs d'encre" utilisés comme pigments noirs dans les encres d'imprimerie, les peintures.

Les noirs de carbone peuvent être utilisés à l'état isolé, tels que disponibles commercialement, ou sous tout autre forme, par exemple comme support de certains des additifs de caoutchouterie utilisés.

### II-5. Additifs divers

Les compositions de caoutchouc des bandes de roulement conformes à l'invention peuvent comporter également tout ou partie des additifs habituellement utilisés dans les compositions d'élastomères destinées à la fabrication de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 précitée, un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel (non aromatique ou très faiblement aromatique), au moins un composé choisi dans le groupe constitué par les huiles naphténiques, paraffiniques, huiles MES, huiles TDAE, les esters (en particulier trioléates) de glycérol, les résines plastifiantes hydrocarbonées présentant de préférence une valeur élevée de Tg (de préférence supérieure à 30°C), et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes).
température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé conforme à l'invention, pour préparer une bande de roulement de pneumatique conforme à l'invention comporte les étapes suivantes :
- incorporer à un élastomère diénique, dans un mélangeur :
   - une charge inorganique renforçante ;
   - un agent de couplage charge inorganique/ élastomère assurant la liaison entre la charge inorganique renforçante et l'élastomère diénique ;
   - entre 0,05 et 1,5 pce de noir de carbone, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
   - un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

Selon un mode de réalisation préférentiel de l'invention, tous les constituants de base des compositions des bandes de roulement conformes à l'invention, à l'exception du système de vulcanisation, à savoir la charge inorganique renforçante, l'agent de couplage et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. Une seconde étape de travail thermomécanique peut être éventuellement ajoutée, dans ce mélangeur interne, par exemple après une étape de' refroidissement intermédiaire (de préférence à une température inférieure à 100°C), dans le but

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. Une seconde étape de travail thermomécanique peut être éventuellement ajoutée, dans ce mélangeur interne, par exemple après une étape de refroidissement intermédiaire (de préférence à une température inférieure à 100°C), dans le but de faire subir aux compositions un traitement thermique complémentaire, notamment pour améliorer la dispersion, dans la matrice élastomérique, de la charge inorganique renforçante et de son agent de couplage. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Comme expliqué précédemment et illustré par les exemples de réalisation qui suivent, une ultime étape de photo-oxydation de la surface de la bande de roulement, complétant les étapes précédemment décrites, confère à cette dernière une adhérence notablement améliorée sur sol mouillé ou humide.

Cette étape complémentaire peut consister en une simple exposition naturelle au rayonnement UV-visible ou en un vieillissement artificiel, par exemple à l'aide d'une ou plusieurs lampe(s) émettant dans l'UV-visible (e.g. lampe à vapeur de mercure, lampe au xénon, lampe à fluorescence, lampes aux halogénures métalliques), ou encore dans une enceinte de photo-vieillissement accéléré pouvant comporter une ou plusieurs desdites lampes.

Dans le procédé conforme à l'invention, on a de préférence au moins une, plus préférentiellement l'ensemble des caractéristiques suivantes qui est vérifié :
- la quantité de charge inorganique renforçante est supérieure à 50 pce;
- la quantité d'agent de couplage est comprise entre 2 et 15 pce;
- la température maximale de malaxage thermomécanique est comprise entre 145°C et 180°C;
- la charge inorganique renforçante est une charge siliceuse ou alumineuse;
- la quantité de noir de carbone est comprise entre 0,1 et 1 pce;
- l'agent de couplage au moins bifonctionnel est un organosilane ou un polyorganosiloxane;
- l'élastomère diénique est un copolymère de butadiène-styrène (SBR), de préférence utilisé en mélange avec un polybutadiène.

Plus préférentiellement, dans ce procédé, on a au moins une, encore plus préférentiellement l'ensemble des caractéristiques suivantes qui est vérifié :
- la quantité de charge inorganique est comprise entre 60 et 140 pce, en particulier dans un domaine de 70 à 130 pce;
- la quantité d'agent de couplage est comprise entre 4 et 12 pce, en particulier entre 4 et 8 pce;
- la charge inorganique renforçante est de la silice;
- la quantité de noir de carbone est comprise entre 0,1 et 0,5 pce;
- l'agent de couplage est un polysulfure de bis-alkoxyl(C₁-C₄)silylpropyle ou de bis-hydroxysilylpropyle ;
- le SBR est un SBR préparé en solution et le polybutadiène possède plus de 90% de liaisons cis-1,4.

Les compositions de caoutchouc précédemment décrites, à base d'élastomère diénique, de charge inorganique renforçante, d'un agent de couplage et du noir de carbone en très faible quantité peuvent constituer la totalité ou une partie seulement de la bande de roulement conforme à l'invention.

L'invention s'applique notamment aux cas où ces compositions de caoutchouc comportant le très faible taux noir de carbone forment uniquement une partie de la bande de roulement de l'invention, en particulier seule la partie superficielle de cette dernière (y compris les parois latérales des motifs de relief de la sculpture) destinée à entrer en contact avec le sol lors du roulage du pneumatique, à un moment ou un autre en cours de vie de ce dernier, c'est-à-dire que ledit pneumatique soit à l'état neuf ou dans un état d'usure partielle.

Ainsi, à titre d'exemple, dans une bande de roulement du type composite constituée par exemple de deux couches radialement superposées (structure dite *"cap-base"*), toutes deux destinées à entrer en contact avec la route lors du roulage du pneumatique, la partie comportant le très faible taux de noir de carbone pourra constituer la couche radialement externe de la bande de roulement en contact avec le sol dès le début du roulage du pneumatique neuf, ou au contraire sa couche radialement interne destinée à entrer en contact avec le sol ultérieurement, dans les cas où l'on souhaiterait par exemple "retarder" l'effet technique procuré par l'invention, en compensant ainsi la perte d'adhérence sur sol mouillé résultant de l'usure partielle de la bande de roulement (diminution de profondeur de relief de la sculpture).

L'invention concerne les bandes de roulement précédemment décrites ainsi que les pneumatiques comportant ces bandes de roulement, tant à l'état cru (i.e., avant cuisson) qu'à l'état cuit (i.e., après réticulation ou vulcanisation), avant comme après traitement de photo-oxydation.

### III. EXEMPLES DE REALISATION DE L'INVENTION

### III-1. Préparation des compositions de caoutchouc et bandes de roulement

On procède pour les essais qui suivent de la manière suivante: on introduit dans un mélangeur interne, rempli à 70% et dont la température initiale de cuve est d'environ 60°C, successivement la charge inorganique renforçante (silice), le noir de carbone, l'agent de couplage, l'élastomère diénique ou le mélange d'élastomères diéniques, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de "tombée" de 165°C.

On récupère le mélange ainsi obtenu, on le refroidit puis on incorpore soufre et accélérateur sulfénamide sur un mélangeur externe (homo-finisseur) à 30°C, en mélangeant le tout (phase productive) pendant un temps approprié, compris entre 5 et 12 min selon les cas.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées directement sous la forme de bandes de roulement de pneumatiques tourisme.

### III-2. Essais

### A) Essai 1

Dans ce premier essai, on compare deux compositions à base d'élastomères diéniques SBR et BR connus, renforcées par de la silice et comportant une faible ou très faible quantité de noir de carbone.

Ces deux compositions, destinées à former des bandes de roulement de pneumatiques pour véhicules tourisme, sont notées ici C-1 et C-2 et se distinguent essentiellement par la quantité de noir de carbone qu'elles contiennent :
- C-1 (selon art antérieur) : 6 pce de noir de carbone ;
- C-2 (selon invention) : 0,3 pce de noir de carbone.

Dans la composition C-1, le noir de carbone est utilisé, au taux indiqué de 6 pce, à la fois comme agent de pigmentation noire et comme agent anti-UV, conformément à l'enseignement de l'état de la technique.

Dans la composition C-2, le noir de carbone au très faible taux utilisé remplit certes encore sa fonction d'agent de pigmentation noire, mais ne remplit plus celle d'un agent anti-UV efficace. La composition C-2 possède ainsi une très faible résistance à la photo-oxydation, en d'autres termes une photo-oxydabilité élevée que l'on suppose a posteriori - c'est tout du moins ce que semblent démontrer les essais N°2 et N°3 qui suivent - comme étant favorable à l'adhérence sur route mouillée.

Les tableaux 1 et 2 donnent la formulation des différentes compositions (tableau 1 - taux des différents produits exprimés en pce), leurs propriétés avant et après cuisson (45 min à 150°C). L'examen des différents résultats du tableau 2 ne révèle aucune différence notable entre les propriétés des deux compositions, tant du point de vue de leur aptitude à la mise en oeuvre à l'état cru (plasticité Mooney) que des propriétés mécaniques (modules, rapport des modules MA300/MA100 indicateur connu du niveau de renforcement, propriétés à la rupture), comme pouvait s'y attendre l'homme du métier compte tenu de la très grande similitude existant entre les deux compositions testées.

### B) Essai 2

Les compositions C-1 et C-2 précédemment décrites sont ensuite utilisées comme bandes de roulement de pneumatiques tourisme à carcasse radiale, de dimension 195/65 R15 (indice de vitesse H), conventionnellement fabriqués et vulcanisés, en tous points identiques hormis la composition de caoutchouc constitutive de la bande de roulement.

Ces pneumatiques sont notés P-1 et P-2 ; ils ont été soumis, pour la moitié d'entre eux, à un vieillissement UV (exposition naturelle au rayonnement ultraviolet et visible) d'une durée de trois jours. Pour ce traitement aux UV, les pneumatiques ont été exposés à l'extérieur, en position statique, selon une orientation sud (site méditerranéen ensoleillé avec température moyenne de jour de 15°C), ces pneumatiques subissant une rotation autour de leur axe de 1/3 de tour chaque jour, de manière à exposer complètement leur bande de roulement.

Tous les pneumatiques ont été ensuite montés sur un véhicule tourisme pour être soumis au test de freinage sur route mouillée décrit au paragraphe 1-3 précédent. Les conditions particulières du test sont les suivantes : véhicule Renault modèle Laguna (pression avant et arrière : 2,0 bars) ; pneus testés montés à l'avant du véhicule.

Les résultats du test de freinage sont rapportés dans le tableau 3, en unités relatives ("u.r." - base 100 retenue pour le pneumatique témoin P-1 avant vieillissement UV).

Seul le pneumatique de l'invention P-2, après et seulement après exposition aux UV, présente une réduction de la distance de freinage: un gain de 11% environ est enregistré. Le vieillissement UV est par contre sans aucun effet sur la performance du pneumatique témoin.

Une série de six freinages successifs conduits, sur le même véhicule Laguna équipé des pneumatiques P-2 "photo-oxydés", démontre (voir résultats du tableau 4) la pérennité de l'effet technique observé, avec un maintien du gain aux environs de 10-15% pour chaque freinage successif.

Ce comportement, que ne laissait nullement prévoir les propriétés de caoutchouterie de l'Essai 1 précédent, est tout aussi remarquable qu'inattendu. Un tel résultat équivaut à une réduction de la distance de freinage de 5,0 à 7,5 m par rapport à une distance nominale (référence de départ) qui serait par exemple de 50 m, ce qui est bien sûr très significatif.

### C) Essai 3

Les tests précédents ont été repris, et leurs résultats confirmés, sur trois nouvelles compositions élastomériques C-3 à C-5, de formulation voisine des précédentes C-1 et C-2 (voir tableau 5 annexé) :
- C-3 (selon art antérieur) : 6 pce de noir de carbone ;
- C-4 (selon l'invention) : 0,3 pce de noir de carbone ;
- C-5 (selon l'invention) : 0,3 pce de noir de carbone.

La composition C-3 est identique à la composition témoin C-1 précédente. Les compositions C-4 et C-5 diffèrent de la composition C-2 précédente par une modification du système plastifiant, l'huile aromatique étant remplacée par une combinaison de résine plastifiante hydrocarbonée à haute Tg et, soit d'huile MES pour la composition C-4, soit d'huile de tournesol oléique pour la composition C-5.

Les trois compositions ont été testées comme bande de roulement de pneu tourisme, comme précédemment pour l'Essai N°2, aux deux différences près qui suivent :
- d'une part les bandes de roulement ont subi un traitement de photo-oxydation beaucoup plus court (12 heures, au lieu de 3 jours précédemment en vieillissement naturel) grâce à l'utilisation d'une enceinte de photo-vieillissement accéléré ;
- d'autre part le traitement a été réalisé sur les bandes de roulement à l'état cru, c'est-à-dire avant l'opération de cuisson finale.

L'enceinte de photo-vieillissement utilisée était équipée de 4 lampes UV-visible à vapeur de Hg haute pression, délivrant entre 300 et 400 nm une puissance totale d'environ 60 W/m², situées à une distance d'environ 15 cm de la surface à traiter.

Les pneumatiques correspondants, notés P-3 à P-5, après traitement UV ou pas de leur bande de roulement, puis cuisson, ont été soumis au test de freinage du paragraphe I-3.

Les résultats sont rapportés dans le tableau 6 annexé, en unités relatives, la base 100 étant retenue pour le pneumatique témoin P-3 sans vieillissement UV-visible.

On note tout d'abord que le système plastifiant des compositions C-4 et C-5 (dépourvu d'huile aromatique) est déjà favorable à l'adhérence des pneumatiques P-4 et P-5, même sans traitement UV, puisqu'un gain de 2% est enregistré par rapport aux compositions et pneumatiques témoins (C-3 et P-3). Un tel effet est connu de l'homme du métier (voir par exemple demandes WO02/088238, WO2004/022644 précitées).

Mais seuls les pneumatiques conformes à l'invention P-4 et P-5, dont les bandes de roulement ont subi le traitement UV-visible, montrent une réduction très sensible de la distance de freinage, avec un gain moyen de 12% pour les pneus P-4 (système plastifiant à base de résine hydrocarbonée et d'huile MES) et de 14% pour les pneus P-5 (système plastifiant à base de résine hydrocarbonée et d'huile de tournesol oléique), par rapport à la référence retenue (pneus témoins P-3).

Il est bien confirmé que le vieillissement UV-visible est par contre sans effet sur la performance de freinage des pneus témoins P-3 dont la bande de roulement comporte un taux conventionnel (6 pce) de noir de carbone.

Comme précédemment pour l'essai N°2, une série de six freinages successifs démontre, pour chaque pneu conforme à l'invention (P-4 et P-5), l'effet pérenne de l'invention, avec maintien du gain moyen aux environs de 11-12% lors de chaque freinage successif (voir tableau 7).

En conclusion, l'invention permet d'améliorer de manière tout à fait notable et inattendue les performances d'adhérence sur sol mouillé des pneumatiques comportant des bandes de roulement conformes à l'invention.

Ce résultat est, qui plus est, obtenu tout en maintenant les performances de résistance au roulement et de résistance à l'usure aux niveaux élevés que l'on est en droit d'attendre aujourd'hui de compositions de caoutchouc renforcées de charges inorganiques telles que des silices hautement dispersibles.

On suppose que cette adhérence améliorée pourrait être liée à un état de surface oxydé de la bande de roulement, très superficiel et localisé, favorable à un meilleur accrochage du pneumatique sur sol mouillé, obtenu après photo-oxydation de ladite bande de roulement, une telle photo-oxydation n'étant rendue possible que grâce à la très faible quantité de noir de carbone qui est utilisée.

Un tel traitement photo-oxydant, notamment sous rayonnement UV-visible, peut être mis en oeuvre pendant la fabrication même des bandes de roulement ou des pneumatiques, à l'état cru ou après vulcanisation, voire même ultérieurement. Il pourrait être conduit par exemple à fréquence régulière sur des bandes de roulement ayant déjà subi une usure partielle, en cours de vie des pneumatiques et selon l'usage particulier de ces derniers, afin de leur redonner, en quelque sorte "à la demande", une adhérence améliorée sur sol mouillé.

**Tableau 1**

| Composition N° : | C-1 | C-2 |
|---|---|---|
| SBR (1) | 70 | 70 |
| BR (2) | 30 | 30 |
| noir de carbone (3) | 6 | - |
| noir de carbone (4) | - | 0.3 |
| silice (5) | 80 | 80 |
| agent de couplage (6) | 6.4 | 6.4 |
| plastifiant (7) | 33.3 | 33.3 |
| DPG (8) | 1.5 | 1.5 |
| ZnO | 2.5 | 2.5 |
| acide stéarique | 2 | 2 |
| cire anti-ozone | 1.5 | 1.5 |
| antioxydant (9) | 1.9 | 1.9 |
| soufre | 1.1 | 1.1 |
| accélérateur (10) | 2.0 | 2.0 |

| | | |
|---|---|---|
| (1) SBR (exprimé en SBR sec) étendu avec 18% en poids (12.6 pce) d'huile (soit au total 82.6 pce de SBR étendu) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) noir de carbone N234 ; (4) noir de carbone N772 ; (5) silice "Zeosil 1165MP" de la société Rhodia, type "HDS" - (BET et CTAB : environ 160 m²/g); (6) agent de couplage TESPT ("Si69" de la société Degussa) ; (7) huile aromatique totale (y compris huile d'extension du SBR) ; (8) diphénylguanidine (Perkacit DPG de la société Flexsys) ; (9) N-1,3-diméthylbutyl-N-phénylparaphénylènediamine (Santoflex 6-PPD de Flexsys); (10) N-cyclohexyl-2-benzothiazyl-sulfénamide (Santocure CBS de Flexsys). | | |

**Tableau 2**

| Composition N°: | C-1 | C-2 |
|---|---|---|
| *Propriétés avant cuisson:* | | |
| Mooney (UM) | 99 | 92 |

| *Propriétés après cuisson:* | | |
|---|---|---|
| MA10 (MPa) | 7.3 | 5.3 |
| MA100 MPa) | 2.2 | 1.8 |
| MA300 (MPa) | 2.3 | 2.0 |
| MA300/MA100 | 1.05 | 1.11 |
| Contrainte rupture (MPa) | 19.5 | 18.3 |
| Allongement rupture (%) | 520 | 530 |

**Tableau 3**

| Pneumatique: | P-1 (art antérieur) | P-2 (invention) |
|---|---|---|
| Avant vieillissement UV | 100 | 100 |
| Après vieillissement UV | 100 | 111 |

| | | |
|---|---|---|
| Performance en freinage (1^{er} freinage) sur route mouillée (en u. r.) | | |

**Tableau 4**

| N° Freinage | 1 | 2 | 3 | 4 | 5 | 6 |
|---|---|---|---|---|---|---|
| Pneu P-2 après vieillissement UV : | 111 | 110 | 114 | 112 | 112 | 111 |

| | | | | | | |
|---|---|---|---|---|---|---|
| Freinages successifs sur route mouillée (en u. r.) | | | | | | |

**Tableau 5**

| Composition N° : | C-3 | C-4 | C-5 |
|---|---|---|---|
| SBR (1) | 70 | 70 | 70 |
| BR (2) | 30 | 30 | 30 |
| noir de carbone (3) | 6 | 0.3 | 0.3 |
| silice (5) | 80 | 80 | 80 |
| agent de couplage (6) | 6.4 | 6.4 | 6.4 |
| plastifiant (7) | 33 | | |
| plastifiant (11) | | 13 | |
| plastifiant (12) | | | 17 |
| plastifiant (13) | | 15 | 11 |
| DPG (8) | 1.5 | 1.5 | 1.5 |
| ZnO | 2.5 | 2.5 | 2.5 |
| acide stéarique | 2 | 2 | 2 |
| cire anti-ozone | 1.5 | 1.5 | 1.5 |
| antioxydant (9) | 1.9 | 1.9 | 1.9 |
| Soufre | 1.1 | 1.1 | 1.1 |
| accélérateur (10) | 2.0 | 2.0 | 2.0 |

| | | | |
|---|---|---|---|
| (1) à (10) : identique au tableau 1 ; (11) huile MES (totale, y compris huile d'extension du SBR - huile "Flexon 683", société Exxon Mobil) ; (12) trioléate de glycérol (y compris huile d'extension du SBR - huile de tournesol à 85% en poids d'acide oléique ; - "Lubrirob Tod 1880" de la société Novance) ; (13) résine hydrocarbonée plastifiante à haute Tg (88°C) (résine polyalphapinène "R2495" - société Hercules) ; | | | |

**Tableau 6**

| Pneumatique : | P-3 (art antérieur) | P-4 (invention) | P-5 (invention) |
|---|---|---|---|
| Avant vieillissement UV | 100 | 102 | 102 |
| Après vieillissement UV | 100 | 112 | 114 |

| | | | |
|---|---|---|---|
| Performance en freinage (1^{er} freinage) sur route mouillée (u. r.) | | | |

**Tableau 7**

| N°Freinage: | 1 | 2 | 3 | 4 | 5 | 6 |
|---|---|---|---|---|---|---|
| Pneu P-4 après vieillissement UV: | 112 | 108 | 114 | 115 | 110 | 109 |
| Pneu P-5 après vieillissement UV : | 114 | 105 | 114 | 116 | 106 | 116 |

| | | | | | | |
|---|---|---|---|---|---|---|
| Freinages successifs sur route mouillée (u. r.) | | | | | | |

## Revendications

1. Bande de roulement de pneumatique comportant une composition de caoutchouc à base d'au moins un élastomère diénique, une charge inorganique renforçante, un agent de couplage charge inorganique/ élastomère et du noir de carbone, **caractérisée en ce que** le taux de noir de carbone est compris entre 0,05 et 1,5 pce (parties en poids pour cent parties d'élastomère).

2. Bande de roulement selon la revendication 1, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

3. Bande de roulement selon l'une quelconque des revendications 1 ou 2, la charge inorganique renforçante étant une charge siliceuse ou alumineuse.

4. Bande de roulement selon l'une quelconque des revendications 1 à 3, la quantité de charge inorganique renforçante étant supérieure à 50 pce, de préférence comprise entre 60 et 140 pce.

5. Bande de roulement selon l'une quelconque des revendications 1 à 4, l'agent de couplage étant un silane ou un polysiloxane au moins bifonctionnel.

6. Bande de roulement selon l'une quelconque des revendications 1 à 5, le taux d'agent de couplage étant compris entre 2 et 15 pce, de préférence entre 4 et 12 pce.

7. Bande de roulement selon l'une quelconque des revendications 1 à 6, le taux de noir de carbone étant compris entre 0,1 et 1,0 pce.

8. Bande de roulement selon la revendication 7, le taux de noir de carbone étant compris entre 0,1 et 0,5 pce.

9. Bande de roulement selon l'une quelconque des revendications 2 à 8, l'élastomère diénique étant un copolymère de butadiène-styrène (SBR), ayant de préférence une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

10. Bande de roulement selon la revendication 9, le SBR étant un SBR préparé en solution, de préférence utilisé en mélange avec un polybutadiène.

11. Bande de roulement selon l'une quelconque des revendications 1 à 10, la composition de caoutchouc comportant à titre d'agent plastifiant au moins un composé choisi dans le groupe constitué par les huiles naphténiques, paraffiniques, MES, TDAE, les esters de glycérol, les résines plastifiantes hydrocarbonées, et les mélanges de tels composés.

12. Bande de roulement selon la revendication 11, le taux d'agent plastifiant total étant compris entre 5 et 50 pce, de préférence entre 10 et 40 pce.

13. Bande de roulement selon l'une quelconque des revendications 1 à 12, **caractérisée en ce qu'**elle se trouve à l'état cru (non vulcanisé).

14. Bande de roulement selon l'une quelconque des revendications 1 à 12, **caractérisée en ce qu'**elle se trouve à l'état cuit (vulcanisé).

15. Bande de roulement selon l'une quelconque des revendications 1 à 14, **caractérisée en ce qu'**elle a subi un traitement de photo-oxydation, de préférence un vieillissement UV-visible accéléré.

16. Procédé pour préparer une bande de roulement de pneumatique présentant, après photo-oxydation de sa surface, une adhérence améliorée sur route mouillée, **caractérisé en ce qu'**il comporte les étapes suivantes:
- incorporer à un élastomère diénique, dans un mélangeur :
• une charge inorganique renforçante ;
• un agent de couplage charge inorganique/ élastomère diénique ;
• entre 0,05 et 1,5 pce de noir de carbone,
en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite :
• un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

17. Procédé selon la revendication 16, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

18. Procédé selon les revendications 16 ou 17, la charge inorganique renforçante étant une charge siliceuse ou alumineuse.

19. Procédé selon l'une quelconque des revendications 16 à 18, la quantité de charge inorganique renforçante étant supérieure à 50 pce, de préférence comprise entre 60 et 140 pce.

20. Procédé selon l'une quelconque des revendications 16 à 19, l'agent de couplage étant un silane ou un polysiloxane au moins bifonctionnel.

21. Procédé selon la revendication 20, le taux d'agent de couplage étant compris entre 2 et 15 pce, de préférence entre 4 et 12 pce.

22. Procédé selon l'une quelconque des revendications 16 à 21, le taux de noir de carbone étant compris entre 0,1 et 1,0 pce.

23. Procédé selon la revendication 22, le taux de noir de carbone étant compris entre 0,1 et 0,5 pce.

24. Procédé selon l'une quelconque des revendications 16 à 23, l'élastomère diénique étant un copolymère de butadiène-styrène (SBR), ayant de préférence une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

25. Procédé selon la revendication 24, le SBR étant un SBR préparé en solution, de préférence utilisé en mélange avec un polybutadiène.

26. Procédé selon l'une quelconque des revendications 16 à 25, **caractérisé en ce qu'**on incorpore en outre à l'élastomère diénique, un agent plastifiant choisi dans le groupe constitué par les huiles naphténiques, paraffiniques, MES, TDAE, les esters de glycérol, les résines plastifiantes hydrocarbonées, et les mélanges de tels composés.

27. Procédé selon la revendication 26, le taux d'agent plastifiant total étant compris entre 5 et 50 pce, de préférence entre 10 et 40 pce.

28. Procédé selon l'une quelconque des revendications 16 à 27, **caractérisé en ce qu'**il est complété par une étape de photo-oxydation de la surface de la bande de roulement.

29. Procédé selon la revendication 28, l'étape de photo-oxydation étant conduite avant vulcanisation de la bande de roulement.

30. Procédé selon la revendication 28, l'étape de photo-oxydation étant conduite après vulcanisation de la bande de roulement.

31. Procédé selon l'une quelconque des revendications 28 à 30, l'étape de photo-oxydation étant conduite à l'aide d'une ou plusieurs lampe(s) UV-visible dans une enceinte de photo-vieillissement accéléré.

32. Procédé selon la revendication 31, l'étape de photo-oxydation étant conduite dans une enceinte de photo-vieillissement accéléré.

33. Utilisation d'une bande de roulement conforme à l'une quelconque des revendications 1 à 15, pour la fabrication ou le rechapage de pneumatiques.

34. Pneumatique comportant une bande de roulement conforme à l'une quelconque des revendications 1 à 15.

## Claims

1. A tyre tread comprising a rubber composition based on at least a diene elastomer, a reinforcing inorganic filler, an inorganic filler/elastomer coupling agent and carbon black, **characterised in that** the amount of carbon black is of between 0.05 and 1.5 phr (parts by weight per hundred parts of elastomer).

2. A tread according to Claim 1, the diene elastomer being selected from the group which consists of polybutadienes, synthetic polyisoprenes, natural rubber, butadiene copolymers, isoprene copolymers and mixtures of these elastomers.

3. A tread according to any one of Claims 1 or 2, the reinforcing inorganic filler being a siliceous or aluminous filler.

4. A tread according to any one of Claims 1 to 3, the quantity of reinforcing inorganic filler being greater than 50 phr, preferably between 60 and 140 phr.

5. A tread according to any one of Claims 1 to 4, the coupling agent being a silane or a polysiloxane which is at least bifunctional.

6. A tread according to any one of Claims 1 to 5, the amount of coupling agent being between 2 and 15 phr, preferably between 4 and 12 phr.

7. A tread according to any one of Claims 1 to 6, the amount of carbon black being between 0.1 and 1.0 phr.

8. A tread according to Claim 7, the amount of carbon black being between 0.1 and 0.5 phr.

9. A tread according to any one of Claims 2 to 8, the diene elastomer being a butadiene/styrene copolymer (SBR) preferably having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

10. A tread according to Claim 9, the SBR being an SBR prepared in solution, preferably used in a mixture with a polybutadiene.

11. A tread according to any one of Claims 1 to 10, the rubber composition comprising as plasticising agent at least one compound selected from among the group consisting of naphthenic oils, paraffinic oils, MES oils, TDAE oils, glycerol esters, hydrocarbon plasticising resins and mixtures of such compounds.

12. A tread according to Claim 11, the amount of total plasticising agent being between 5 and 50 phr, preferably between 10 and 40 phr.

13. A tread according to any one of Claims 1 to 12, **characterised in that** it is in the uncured (non-vulcanised) state.

14. A tread according to any one of Claims 1 to 12, **characterised in that** it is in the cured (vulcanised) state.

15. A tread according to any one of Claims 1 to 14, **characterised in that** it has undergone a photo-oxidation, preferably accelerated visible UV ageing, treatment.

16. A process for preparing a tyre tread having, after photo-oxidation of its surface, improved grip on wet roads, **characterised in that** it comprises the following steps:
- incorporating in a diene elastomer, in a mixer:
• a reinforcing inorganic filler;
• an inorganic filler/diene elastomer coupling agent;
• between 0.05 and 1.5 phr of carbon black,
by thermomechanically kneading the entire mixture, in one or more stages, until a maximum temperature of between 130°C and 200°C is reached;
- cooling the entire mixture to a temperature of less than 100°C;
- then incorporating:
• a vulcanisation system;
- kneading the entire mixture until a maximum temperature less than 120°C is reached;
- extruding or calendering the rubber composition thus obtained, in the form of a tyre tread.

17. A process according to Claim 16, the diene elastomer being selected from among the group consisting of polybutadienes, synthetic polyisoprenes, natural rubber, butadiene copolymers, isoprene copolymers and mixtures of these elastomers.

18. A process according to Claims 16 or 17, the reinforcing inorganic filler being a siliceous or aluminous filler.

19. A process according to any one of Claims 16 to 18, the quantity of reinforcing inorganic filler being greater than 50 phr, preferably of between 60 and 140 phr.

20. A process according to any one of Claims 16 to 19, the coupling agent being a silane or a polysiloxane which is at least bifunctional.

21. A process according to Claim 20, the amount of coupling agent being between 2 and 15 phr, preferably between 4 and 12 phr.

22. A process according to any one of Claims 16 to 21, the amount of carbon black being between 0.1 and 1.0 phr.

23. A process according to Claim 22, the amount of carbon black being between 0.1 and 0.5 phr.

24. A process according to any one of Claims 16 to 23, the diene elastomer being a butadiene/styrene copolymer (SBR), preferably having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

25. A process according to Claim 24, the SBR being an SBR prepared in solution, preferably used in a mixture with a polybutadiene.

26. A process according to any one of Claims 16 to 25, **characterised in that** there are further incorporated in the diene elastomer a plasticising agent selected from among the group consisting of naphthenic oils, paraffinic oils, MES oils, TDAE oils, glycerol esters, hydrocarbon plasticising resins and mixtures of such compounds.

27. A process according to Claim 26, the amount of total plasticising agent being between 5 and 50 phr, preferably between 10 and 40 phr.

28. A process according to any one of Claims 16 to 27, **characterised in that** it is finished off by a step of photo-oxidation of the surface of the tread.

29. A process according to Claim 28, the photo-oxidation step being carried out before vulcanisation of the tread.

30. A process according to Claim 28, the photo-oxidation step being carried out after vulcanisation of the tread.

31. A process according to any one of Claims 28 to 30, the photo-oxidation step being carried out using one or more visible UV lamp(s).

32. A process according to Claim 31, the photo-oxidation step being carried out in an accelerated photo-ageing enclosure.

33. The use of a tread according to any one of Claims 1 to 15, for the manufacture or retreading of tyres.

34. Tyre comprising a tread according to any one of Claims 1 to 15.

## Patentansprüche

1. Laufstreifen für Luftreifen, der eine Kautschukzusammensetzung auf Basis mindestens eines Dien-Elastomers, einen verstärkenden anorganischen Füllstoff, ein Kupplungsmittel für den anorganischen Füllstoff / das Elastomer sowie Ruß aufweist, **dadurch gekennzeichnet, dass** der Rußgehalt zwischen 0,05 und 1,5 phr (Gewichtsteile auf hundert Teile Elastomer) liegt.

2. Laufstreifen nach Anspruch 1, wobei das Dien-Elastomer aus der Gruppe ausgewählt ist, die aus den Polybutadienen, den Polyisoprenen synthetischen Ursprungs, natürlichem Kautschuk, den Butadien-Copolymeren, den Isopren-Copolymeren und den Mischungen dieser Elastomere besteht.

3. Laufstreifen nach einem beliebigen der Ansprüche 1 oder 2, wobei es sich bei dem verstärkenden anorganischen Füllstoff um einen siliciumdioxid- oder aluminiumoxidartigen Füllstoff handelt.

4. Laufstreifen nach einem beliebigen der Ansprüche 1 bis 3, wobei die Menge an verstärkendem anorganischen Füllstoff größer als 50 phr ist und vorzugsweise zwischen 60 und 140 phr liegt.

5. Laufstreifen nach einem beliebigen der Ansprüche 1 bis 4, wobei es sich bei dem Kupplungsmittel um ein Silan oder ein Polysiloxan mit mindestens zwei funktionellen Gruppen handelt.

6. Laufstreifen nach einem beliebigen der Ansprüche 1 bis 5, wobei der Kupplungsmittelgehalt zwischen 2 und 15 phr, vorzugsweise zwischen 4 und 12 phr, liegt.

7. Laufstreifen nach einem beliebigen der Ansprüche 1 bis 6, wobei der Rußgehalt zwischen 0,1 und 1,0 phr liegt.

8. Laufstreifen nach Anspruch 7, wobei der Rußgehalt zwischen 0,1 und 0,5 phr liegt.

9. Laufstreifen nach einem beliebigen der Ansprüche 2 bis 8, wobei es sich bei dem Dien-Elastomer um ein Butadien-Styrol-Copolymer (SBR) handelt, das vorzugsweise einen Styrolgehalt zwischen 20 und 30 Gew.-%, einen Gehalt des Butadienteils an Vinylbindungen zwischen 15 % und 65 %, einen Gehalt an trans-1,4-Bindungen zwischen 20 % und 75 % und eine Glasübergangstemperatur zwischen -20 °C und - 55 °C hat.

10. Laufstreifen nach Anspruch 9, wobei es sich bei dem SBR um ein SBR handelt, das in Lösung hergestellt wurde und vorzugsweise in Mischung mit einem Polybutadien verwendet wird.

11. Laufstreifen nach einem beliebigen der Ansprüche 1 bis 10, wobei die Kautschukzusammensetzung als Weichmacher mindestens eine Verbindung aufweist, die aus der Gruppe ausgewählt ist, welche aus den naphthenischen, paraffinartigen, MES-artigen, TDAE-artigen Ölen, den Glycerinestern, den weichmachenden Kohlenwasserstoffharzen und den Mischungen derartiger Verbindungen besteht.

12. Laufstreifen nach Anspruch 11, wobei der Gesamtweichmachergehalt zwischen 5 und 50 phr, vorzugsweise zwischen 10 und 40 phr, liegt.

13. Laufstreifen nach einem beliebigen der Ansprüche 1 bis 12, **dadurch gekennzeichnet, dass** er sich in rohem (nichtvulkanisiertem) Zustand befindet.

14. Laufstreifen nach einem beliebigen der Ansprüche 1 bis 12, **dadurch gekennzeichnet, dass** er sich in wärmebehandeltem (vulkanisiertem) Zustand befindet.

15. Laufstreifen nach einem beliebigen der Ansprüche 1 bis 14, **dadurch gekennzeichnet, dass** er Photooxidationsbehandlung, vorzugsweise eine beschleunigte Alterung durch UV/Vis-Einwirkung erfahren hat.

16. Verfahren zur Herstellung eines Laufstreifens für Luftreifen, der nach Photooxidation seiner Oberfläche eine verbesserte Haftung auf nassen Straßen aufweist, **dadurch gekennzeichnet, dass** es die folgenden Schritte aufweist:
- Einarbeiten in ein Dien-Elastomer, in einer Mischvorrichtung:
• eines verstärkenden anorganischen Füllstoffs;
• eines Kupplungsmittels für den anorganischen Füllstoff / das Dien-Elastomer;
• zwischen 0,05 und 1,5 phr an Ruß,
indem das Ganze einmal oder mehrmals thermomechanisch durchmischt wird, bis eine Höchsttemperatur erzielt wird, die zwischen 130 °C und 200 °C liegt;
- Abkühlen des Gesamtansatzes auf eine Temperatur von weiniger als 100 °C;
- anschließendes Einarbeiten:
• eines Vulkanisationssytems;
- Durchmischen des Ganzen bis zu einer Höchsttemperatur von weniger als 120 °C;
- Extrudieren oder Kalandrieren der auf diese Weise erhaltenen Kautschukzusammensetzung in Form eines Laufstreifens für Luftreifen.

17. Verfahren nach Anspruch 16, wobei das Dien-Elastomer aus der Gruppe ausgewählt ist, die aus den Polybutadienen, den Polyisoprenen synthetischen Ursprungs, natürlichem Kautschuk, den Butadien-Copolymeren, den Isopren-Copolymeren und den Mischungen dieser Elastomere besteht.

18. Verfahren nach den Ansprüchen 16 oder 17, wobei es sich bei dem verstärkenden anorganischen Füllstoff um einen siliciumdioxid- oder aluminiumoxidartigen Füllstoff handelt.

19. Verfahren nach einem beliebigen der Ansprüche 16 bis 18, wobei die Menge an verstärkendem anorganischem Füllstoff größer als 50 phr ist und vorzugsweise zwischen 60 und 140 phr liegt.

20. Verfahren nach einem beliebigen der Ansprüche 16 bis 19, wobei es sich bei dem Kupplungsmittel um ein Silan oder ein Polysiloxan mit mindestens zwei funktionellen Gruppen handelt.

21. Verfahren nach Anspruch 20, wobei der Kupplungsmittelgehalt zwischen 2 und 15 phr, vorzugsweise zwischen 4 und 12 phr, liegt.

22. Verfahren nach einem beliebigen der Ansprüche 16 bis 21, wobei der Rußgehalt zwischen 0,1 und 1,0 phr liegt.

23. Verfahren nach Anspruch 22, wobei der Rußgehalt zwischen 0,1 und 0,5 phr liegt.

24. Verfahren nach einem beliebigen der Ansprüche 16 bis 23, wobei es sich bei dem Dien-Elastomer um ein Butadien-Styrol-Copolymer (SBR) handelt, das vorzugsweise einen Styrolgehalt zwischen 20 und 30 Gew.-%, einen Gehalt des Butadienteils an Vinylbindungen zwischen 15 % und 65 %, einen Gehalt an trans-1,4-Bindungen zwischen 20 % und 75 % und eine Glasübergangstemperatur zwischen -20 °C und -55 °C hat.

25. Verfahren nach Anspruch 24, wobei es sich bei dem SBR um ein SBR handelt, das in Lösung hergestellt wurde und vorzugsweise in Mischung mit einem Polybutadien verwender wird.

26. Verfahren nach einem beliebigen der Ansprüche 16 bis 25, **dadurch gekennzeichnet, dass** darüber hinaus ein Weichmacher, der aus der Gruppe ausgewählt ist, welche aus den naphthenischen, paraffinartigen, MES-artigen, TDAE-artigen Ölen, den Glycerinestern, den weichmachenden Kohlenwasserstoffharzen und den Mischungen derartiger Verbindungen besteht, in das Dien-Elastomer eingearbeitet wird.

27. Verfahren nach Anspruch 26, wobei der Gesamtweichmachergehalt zwischen 5 und 50 phr, vorzugsweise zwischen 10 und 40 phr, liegt.

28. Verfahren nach einem beliebigen der Ansprüche 16 bis 27, **dadurch gekennzeichnet, dass** es durch einen Schritt der Photooxidation der Oberfläche des Laufstreifens vervollständigt wird.

29. Verfahren nach dem Anspruch 28, wobei der Schritt der Photooxidation vor der Vulkanisation des Laufstreifens durchgeführt wird.

30. Verfahren nach Anspruch 28, wobei der Schritt der Photooxidation nach der Vulkanisation des Laufstreifens durchgeführt wird.

31. Verfahren nach einem beliebigen der Ansprüche 28 bis 30, wobei der Schritt der Photooxidation mit Hilfe einer oder mehrerer UV/Vis-Lampen in einer Kammer zur beschleunigten Lichtalterung durchgeführt wird.

32. Verfahren nach Anspruch 31, wobei der Schritt der Photooxidation in einer Kammer zur beschleunigten Lichtalterung durchgeführt wird.

33. Verwendung eines Laufstreifens nach einem beliebigen der Ansprüche 1 bis 15 zur Herstellung oder Runderneuerung von Luftreifen.

34. Luftreifen, der einen Laufstreifen nach einem beliebigen der Ansprüche 1 bis 15 aufweist.
